# EUROPÄISCHE PATENTSCHRIFT

(11) **EP 3 091 179 B1**
(45) Veröffentlichungstag und Bekanntmachung des Hinweises auf die Patenterteilung: **30.06.2021**
(21) Anmeldenummer: 15166682.3
(22) Anmeldetag: 07.05.2015
(51) Int. Cl.: F01D 5/02, F01D 5/06

(54) **ROTORANORDNUNG FÜR EINE STRÖMUNGSMASCHINE UND VERDICHTER**
ROTOR ASSEMBLY FOR A FLUID FLOW ENGINE AND COMPRESSOR
SYSTÈME DE ROTOR POUR UNE TURBOMACHINE ET COMPRESSEUR

(43) Veröffentlichungstag der Anmeldung: 09.11.2016
(73) Patentinhaber: MTU Aero Engines AG, 80995 München (DE)
(72) Erfinder: Boewing, Stefan, 80339 München (DE)

(56) Entgegenhaltungen:
- EP-A2- 1 188 900
- EP-A2- 1 445 422
- US-A- 4 667 532
- US-A1- 2010 316 496
- US-A1- 2011 193 293
- None

## Beschreibung

Die vorliegende Erfindung betrifft eine Rotoranordnung für eine Strömungsmaschine gemäß dem Oberbegriff des Anspruchs 1 sowie einen Verdichter gemäß Anspruch 6.

In Rotoren für Strömungsmaschinen können sich im Betrieb in bestimmten Situationen Flüssigkeitsansammlungen bilden, die sich während des Betriebs der Rotoren in Kavitäten von Rotortrommeln fliehkraftbedingt ansammeln. Erst im Stillstand der Rotoren kann diese angesammelte Flüssigkeit in andere Bereich der Rotoren fließen und möglicherweise verschiedene Nachteile bewirken. Beispielsweise kann sich Öl als Flüssigkeit nach einem erneuten Starten des Rotors in Bereiche der Strömungsmaschine verteilen, die für derartige Ölansammlungen erhebliche Nachteile bewirken. Bei einer möglichen Verwendung der Strömungsmaschine als Flugtriebwerk kann das Öl bei einem Neustart der Rotoren über Gehäusekanäle in die Kabinenzuluft gelangen und dort zu Ölgeruch und Kontaminationen führen.

In der US 2010/0316496 A1 wird eine Wuchtvorrichtung für eine Gasturbine beschrieben, wobei die Wuchtvorrichtung direkt an der Rotorstufe und/oder dem Rotorarm angeordnet ist.

In der US 4,667,532 A wird eine Vorrichtung zur Korrektur von Unwuchten bei Strahlturbinen mit Hohlschaftwellen beschrieben.

In der EP 1 445 422 A2 wird ein Turbinentriebwerk mit einer Wuchtanordnung und Wuchtgewichten beschrieben, wobei die Wuchtgewichte mit einem Rotorbund oder Rotorflansch verbunden sind,

Eine Aufgabe der vorliegenden Erfindung ist es, eine Rotoranordnung für eine Strömungsmaschine vorzuschlagen, bei der Fluidansammlungen vermieden werden können.

Ferner ist es Aufgabe der vorliegenden Erfindung, einen Verdichter vorzuschlagen.

Die erfindungsgemäße Aufgabe wird durch eine Rotoranordnung mit den Merkmalen des Anspruchs 1 gelöst. Sie wird ferner durch einen Verdichter gemäß Anspruch 6 gelöst.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Die erfindungsgemäße Rotoranordnung kann für eine Anwendung in einem Hochdruckverdichter, in einem Niederdruckverdichter, in einer Hochdruckturbine oder in einer Niederdruckturbine eines Flugtriebwerks ausgestaltet sein.

In einigen erfindungsgemäßen Ausführungsformen ist die Strömungsmaschine eine axiale Strömungsmaschine, insbesondere eine Gasturbine, insbesondere eine Fluggasturbine.

Der Begriff "Rotor", wie er hierin verwendet wird, bezeichnet einen Rotationskörper in einer Strömungsmaschine, der sich im bestimmungsgemäßen Gebrauch um eine Rotationsachse oder Drehachse der Strömungsmaschine dreht. Der Rotor umfasst wenigstens eine Rotorstufe. Eine Rotorstufe kann als Laufrad bezeichnet werden oder ein Laufrad umfassen. Eine Rotorstufe umfasst wenigstens mehrere Laufschaufeln und einen Rotorgrundkörper. Der Rotorgrundkörper kann als Scheibe, Rotorscheibe, Ring oder Rotorring bezeichnet werden oder diese umfassen. Ein Rotor kann eine oder mehrere Rotorstufen umfassen.

Ein Rotor kann in eine Strömungsmaschine, insbesondere in eine Gasturbine, eingebaut und montiert werden. Ein Flugtriebwerk kann eine Gasturbine sein oder eine Gasturbine umfassen. Ein Flugtriebwerk kann einen Verdichter mit mehreren Verdichterstufen und eine Turbine mit mehreren Turbinenstufen umfassen. Verdichterstufen und Turbinenstufen können jeweils Rotorstufen und Statorstufen aufweisen.

Die Laufschaufeln eines Rotors können als Schaufeln bezeichnet werden und weisen wenigstens jeweils ein Schaufelblatt, einen Schaufelfuß und eine Schaufelplattform auf. Die Schaufeln können separat, beispielsweise formschlüssig mittels einer wieder lösbaren sogenannten Schwalbenschwanzverbindungen, oder integral mit dem Rotorgrundkörper verbunden sein. Separate Schaufeln können wieder lösbar und/oder formschlüssig und/oder stoffschlüssig mit dem Rotorgrundkörper verbunden sein. Eine integrale Verbindung ist insbesondere eine materialschlüssige Verbindung. Eine integrale Verbindung kann mittels eines generatives Herstellungsverfahrens gefertigt werden. Ein Rotorgrundkörper mit integral mit dem Rotorgrundkörper verbundenen Schaufeln kann als integral beschaufelter Rotor bezeichnet werden. Ein integral beschaufelter Rotor kann ein sogenannter BLISK (Bladed Disk) oder ein BLING (Blade Ring) sein.

Der Rotorgrundkörper kann nach radial innen gerichtete Rotorscheiben und/oder axial ausgerichtete Rotorarme umfassen. Die nach radial innen gerichteten Rotorscheiben können als Verlängerungen oder T-förmige Verlängerungen der Laufschaufeln bezeichnet werden.

Die Rotorarme können als Trommelkörper bezeichnet werden. Der Rotor ist zum direkten oder indirekten Verbinden mit einer Welle der Strömungsmaschine ausgestaltet oder vorbereitet. Eine indirekte Verbindung kann mittels Nabe und/oder mittels weiterer Rotoren ausgeführt sein. Bei einer direkten Verbindung kann der Rotor direkt an die Welle angeflanscht sein.

Der Begriff "Rotortrommel", wie er hierin verwendet wird, bezeichnet Abschnitte von wenigstens zwei axial miteinander verbundenen Rotorgrundkörpern. Insbesondere Rotorarme können eine Rotortrommel ausbilden. Eine Rotortrommel kann gleichfalls über mehr als zwei Rotorgrundkörper sowie optional über mehrere Rotorarme und Rotorscheiben ausgebildet sein. Beispielsweise können mehrere Rotorgrundkörper eines achtstufiger Verdichters in einer Strömungsmaschine eine Rotortrommel ausbilden.

Die Begriffe "Rotorinnenraum und Rotoraußenraum", wie sie hierin verwendet werden, bezeichnen die Räume innerhalb und außerhalb der Rotortrommel von Rotoren. Der Rotorinnenraum wird somit nach radial außen im Wesentlichen durch einen oder mehrere Rotorarme begrenzt. In axialer Richtung wird der Rotorinnenraum im Wesentlichen durch Rotorscheiben begrenzt, wobei zwischen einer Welle, mit der die Rotortrommel direkt oder indirekt verbunden ist und den Rotorscheiben im Allgemeinen ein Spalt ausgebildet ist. Der Rotoraußenraum wird nach radial innen im Wesentlichen durch einen oder mehrere Rotorarme begrenzt. Der Rotoraußenraum umfasst im Wesentlichen den Hauptdurchströmungskanal der Strömungsmaschine. Zwischen einem Rotorarm und dem Hauptdurchströmungskanal können weiterhin beispielsweise Leitradinnenringe, mit oder ohne Einlaufdichtungen, angeordnet sein. Der Rotorinnenraum und/oder der Rotoraußenraum kann mehrere Rotorstufen umfassen.

Axial hintereinander angeordnete Rotorgrundkörper können mittels Rotorarmen und/oder Rotorscheiben miteinander verbunden sein. Die Verbindung ist insbesondere formschlüssig und/oder kraftschlüssig.

In einigen erfindungsgemäßen Ausführungsformen umfasst die erfindungsgemäße Rotoranordnung wenigstens einen Rotor mit einer ersten Rotorstufe, eine Welle, die den Rotor antreibt oder von dem Rotor angetrieben wird, sowie eine erste Nabe zum Verbinden der ersten Rotorstufe mit der Welle. Die erste Rotorstufe kann die erste Rotorstufe am stromauf angeordneten Ende eines Verdichters oder einer Turbine sein. Die erste Rotorstufe ist mittels einer vorderen Nabenverbindung, die als "front-hub" bezeichnet werden kann, mit der Welle verbunden .

In bestimmten erfindungsgemäßen Ausführungsformen ist stromab der ersten Rotorstufe wenigstens eine zweite Rotorstufe angeordnet. Stromab können weitere Rotorstufen angeordnet sein, die beispielsweise einen sechsstufigen oder achtstufigen Rotor bilden. Am Ende der Rotorstufen ist insbesondere eine zweite Nabenverbindung, die als "rear hub" bezeichnet werden kann, angeordnet, die oft die letzte Rotorstufe mit der Welle verbindet. Zwischen der ersten Rotorstufe und der letzten Rotorstufe können weitere Nabenverbindungen einzelner Rotorstufen mit der Welle angeordnet sein. Einzelne Rotorstufen können formschlüssig und/oder kraftschlüssig miteinander verbunden sein. Insbesondere sind mehrere, formschlüssig miteinander verbundene Rotorstufen mit einer Nabe am stromauf angeordneten Ende und einer Nabe am stromab angeordneten Ende kraftschlüssig miteinander fixiert. Die Naben können beispielsweise mittels einer Gewindeverbindung mit der Welle verbunden werden. Mit diesen Gewindeverbindungen können die Rotorstufen miteinander kraftschlüssig verspannt und fixiert werden.

In manchen erfindungsgemäßen Ausführungsformen kann eine Wuchtvorrichtung an der ersten Nabe zum Auswuchten der ersten Rotorstufe ein separates Wuchten der ersten Rotorstufe teilweise oder vollständig ersetzen. Eine teilweise oder vollständige Verlagerung des Wuchtens der ersten Rotorstufe auf die angrenzende Nabe kann vorteilhaft dazu genutzt werden, fliehkraftbedingte Ölansammlungen in einer mit der ersten Rotorstufe verbundenen Rotortrommel zu verringern oder vollständig zu vermeiden. Derartige Ölansammlungen können sich in Kavitäten der Rotortrommel bilden, wenn beispielsweise Wuchtbünde oder Wuchtflansche an der Innenseite der Rotortrommel ein Abfließen von Öl in Ölabschleuderbohrungen hinein verhindern oder begrenzen. Ölabschleuderbohrungen können beispielsweise in einem Rotorarm angeordnet sein. Eine konstruktive Vermeidung von Wuchtvorrichtungen innerhalb der Rotortrommel mit einer Verlagerung des Wuchtens der ersten Rotorstufe einer erfindungsgemäßen Rotoranordnung auf die angrenzende Nabe kann eine Ölansammlung in der Rotortrommel vorteilhaft verringern oder ausschließen.

Ölansammlungen in der Rotortrommel können beispielsweise durch Lageröl einer Rotorlagerung bedingt sein. Insbesondere aufgrund erhöhter Reibungswärme kann Lageröl aus dem Lager austreten oder verdunsten. Dieses Lageröl oder kondensierter Lagerölnebel kann sich in mittelbar oder unmittelbar zum Lager angrenzenden Rotorstufen oder in Kavitäten einer Rotortrommel sammeln.

In gewissen erfindungsgemäßen Ausführungsformen weist die erste Rotorstufe einen integral beschaufelten Rotorgrundkörper oder einen Rotorgrundkörper mit formschlüssig verbundenen Schaufeln auf. Ein integral beschaufelter Rotorgrundkörper kann ein generativ hergestelltes Laufrad sein. Formschlüssig mit dem Rotorgrundkörper verbundene Schaufeln können mittels einer sogenannte Schwalbenschwanzverbindung verbunden sein.

In einigen erfindungsgemäßen Ausführungsformen umfasst die erste Nabe einen Wuchtring und/oder Wuchtgewichte zum Auswuchten der ersten Rotorstufe. Ein Wuchtring kann beispielsweise mittels eines materialabtragenden Verfahrens gewuchtet werden, indem an bestimmten Stellen auf dem Umfang Bereiche aus dem Wuchtring abgeschliffen oder abgefräst werden. Wuchtgewichte können beispielsweise an einen Wuchtflansch an verschiedenen Stellen auf dem Umfang angeschraubt werden.

In bestimmten erfindungsgemäßen Ausführungsformen weist die erste Rotorstufe keinen Wuchtbund und/oder Wuchtflansch auf. In diesem Fall wird die erste Rotorstufe vollständig oder weitgehend mit der oder den Wuchtvorrichtungen der angrenzenden Nabe ausgewuchtet. Es können jedoch Restunwuchten der ersten Rotorstufe verbleiben, die nicht mittels der Wuchtvorrichtungen der Nabe ausgewuchtet werden können. Diese Restunwuchten können, je nach Einsatzbedingungen und Betriebspunkten der Strömungsmaschine, toleriert werden.

In manchen erfindungsgemäßen Ausführungsformen umfasst die erste Rotorstufe einen ersten Rotorgrundkörper, und eine zweite Rotorstufe einen zweiten Rotorgrundkörper mit einem, als Trommelkörper ausgebildeten Rotorarm, welcher zum formschlüssigen und/oder kraftschlüssigen Verbinden der ersten Rotorstufe mit der zweiten Rotorstufe ausgebildet ist. Der Rotorarm weist eine radiale Durchtrittsöffnung zum Durchströmen von Fluiden aus einem Rotorinnenraum in einen Rotoraußenraum.

Weiterhin kann der Rotorarm auf seiner äußeren, dem Hauptdurchströmungskanal zugewandten Seite, eine weitere Wuchtvorrichtung aufweisen. Die weitere Wuchtvorrichtung ist insbesondere ein mit dem Rotorarm kraftschlüssig verbundener Wuchtring oder Wuchtbund.

Manche oder alle erfindungsgemäßen Ausführungsformen können einen, mehrere oder alle der oben und/oder im Folgenden genannten Vorteile aufweisen.

Mittels der erfindungsgemäßen Rotoranordnung und einer Verlagerung des Wuchtens der ersten Rotorstufe auf die Nabe können Ölansammlungen, beispielsweise Lagerölansammlungen, innerhalb einer, durch wenigstens Rotorstufen ausgebildeten Rotortrommel vorteilhaft vermieden werden. Insbesondere ermöglicht es die Anordnung eines Wuchtrings auf der radial äußeren Seite eines Rotorarms, nur noch kleine oder überhaupt keine Kavitäten, in denen sich Öl ansammeln kann, in der Rotortrommel entstehen zu lassen. Dadurch kann, bei einer Anwendung der Rotortrommel in einem Flugtriebwerk, die Möglichkeit oder Gefahr von Kontaminationen oder Ölgeruch in der Kabinenluft von Flugzeugen durch Lageröl oder Lagerölnebel zumindest verringert werden. Lageröl oder Lagerölnebel kann in einer rotierenden, erfindungsgemäßen Rotortrommel unmittelbar durch eine Öffnung am Radius der Innenkontur der Rotortrommel in den Hauptstrom der Leit- und Laufradbeschaufelung transportiert und zum Auslass der Strömungsmaschine weitergeleitet werden. Aufgrund dieses raschen Abtransports kann auch eine mögliche Feuergefahr durch das Öl zumindest verringert werden. Ein Sammeln von Öl und/oder ein Kondensieren eines Ölnebels während eines Stillstands der Rotortrommel mit einem anschließenden möglichen Transport des Öls aus der Hauptströmung in Abzweigungen für die Zapfluft, z. B. für die Kabinenluft in Flugzeugen, kann vorteilhaft vermieden werden.

Die erfindungsgemäße Rotoranordnung kann in Turbinen und/ oder Verdichtern eingesetzt werden. Durch eine Positionierung der Wuchtvorrichtungen in den Rotoraußenraum und/oder auf eine angrenzende Nabe kann der Bauraum und das Gewicht der Rotortrommel vorteilhaft optimiert werden. Dadurch können sich wirtschaftliche Vorteile ergeben, beispielsweise durch einen geringeren Kerosinverbrauch und/ oder eine kompakte Bauform.

Eine Anordnung des Wuchtrings außerhalb der Rotortrommel, und damit eine Anordnung auf einem größeren Durchmesser gegenüber einer Anordnung des Wuchtrings innerhalb der Rotortrommel, kann zu einer Verringerung der Masse und des Gewichts einer Flanschanordnung (Anordnung zum formschlüssigen Anflanschen eines weiteren Rotors) führen. Dies kann vorteilhaft zu einer Reduzierung des Gewichts des Laufrads führen.

Die erfindungsgemäße Rotoranordnung ermöglicht ein Wuchten direkt an der Nabe, welche einzelne Rotoren, insbesondere die endseitig stromauf und stromab angeordneten Rotorscheiben eines mehrstufigen Rotorverbunds, mit einer Welle verbindet. Ein Wuchten dieser mit den Naben verbundenen Rotorstufen kann vorteilhaft entfallen. Somit können die Wuchtzeiten und der Wuchtaufwand insgesamt reduziert werden, und somit Zeit und Kosten vorteilhaft verringert werden.

Die vorliegende Erfindung wird im Folgenden anhand der beigefügten Zeichnung exemplarisch erläutert.

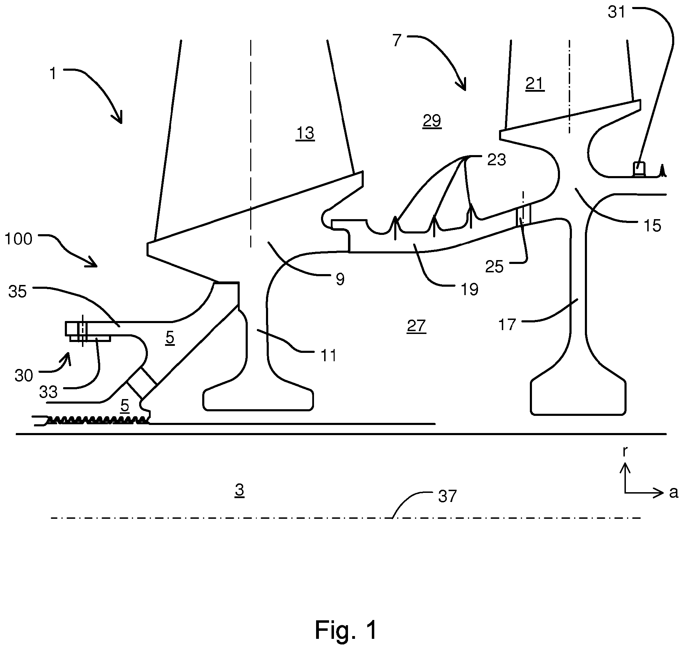

- **Fig. 1**: zeigt eine erfindungsgemäße Rotoranordnung mit einer ersten Rotorstufe, einer Welle und einer Nabe, sowie eine zweite Rotorstufe.

Fig. 1 zeigt eine erfindungsgemäße Rotoranordnung 100 mit einer ersten Rotorstufe 1, einer Welle 3 und einer Nabe 5, sowie eine zweite Rotorstufe 7. Die Durchströmungsrichtung des Rotors entspricht der Axialrichtung a. Weitere Koordinatenachsen sind die Radialrichtung r und die Umfangsrichtung u.

Die erste Rotorstufe 1 umfasst einen ersten Rotorgrundkörper 9 mit einer nach radial innen gerichteten ersten Rotorscheibe 11 und einer integral verbundenen ersten Schaufel 13. Der erste Rotorgrundkörper 9 ist stromauf (in Fig. 1 links) formschlüssig mit der Nabe 5 und stromab (in Fig. 1 rechts) formschlüssig mit der zweiten Rotorstufe 7 verbunden.

Die zweite Rotorstufe 7 umfasst einen zweiten Rotorgrundkörper 15 mit einer nach radial innen gerichteten zweiten Rotorscheibe 17, einem trommelförmigen Rotorarm 19 und einer integral verbundenen zweiten Schaufel 21. Der zweite Rotorgrundkörper 15 ist stromauf formschlüssig mittels des Rotorarms 19 mit dem ersten Rotorgrundkörper 9 verbunden. Der Rotorarm 19 weist ferner Dichtspitzen 23 zum Ausbilden einer Spaltdichtung gegen eine Einlaufdichtung eines Stators (in Fig. 1 nicht dargestellt) und eine Durchtrittsöffnung 25 zum fliehkraftbedingten Ausschleudern oder Abschleudern von Fluiden aus einem Rotorinnenraum 27 in einen Rotoraußenraum 29 auf. Auf der stromab zugewandten Seite der zweiten Rotorstufe 7 ist ein Wuchtbund 31 auf der nach außen gerichteten Seite des Rotorarms bzw. der Rotortrommel dargestellt.

Die Nabe 5 verbindet die erste Rotorstufe 1 mit der Welle 3. Die Welle-Nabe-Verbindung ist mit einem Gewinde ausgeführt. Mit Hilfe des Gewindes kann der Rotor mit den wenigstens zwei Rotorstufen 1, 7 fixiert werden. Insbesondere ist am stromab angeordneten Ende des Rotors (in Fig. 1 nicht dargestellt) eine weitere Nabe zum Gegenfixieren angeordnet.

Die Nabe 5 weist weiterhin als Wuchtvorrichtung 30 wenigstens ein Wuchtgewicht 33 auf, welches auf einem Wuchtflansch 35 angeschraubt ist. Über dem Umfang der Nabe 3 können weitere Wuchtgewichte angeordnet sein. Die erste Rotorstufe 1 weist keine Wuchtvorrichtung auf. Die erste Rotorstufe 1 wird mit der erfindungsgemäßen Rotoranordnung 100 durch das Wuchtgewicht 33 und weitere Wuchtvorrichtungen der Nabe 5 ausgewuchtet.

Der Rotor dreht sich um die Rotorachse 37 (oder Drehachse, Rotationsachse).

### Bezugszeichenliste

- 100: Rotoranordnung
- a: axial; Axialrichtung
- r: Radial; Radialrichtung
- u: Umfangsrichtung
- 1: erste Rotorstufe
- 3: Welle
- 5: Nabe
- 7: zweite Rotorstufe
- 9: erster Rotorgrundkörper
- 11: erste Rotorscheibe
- 13: erste Schaufel
- 15: zweiter Rotorgrundkörper
- 17: zweite Rotorscheibe
- 19: Rotorarm
- 21: zweite Schaufel
- 27: Rotorinnenraum
- 29: Rotoraußenraum
- 31: Wuchtbund
- 33: Wuchtgewicht
- 35: Wuchtflansch
- 37: Rotorachse

## Patentansprüche

1. Rotoranordnung (100) für eine Strömungsmaschine, aufweisend einen Rotor mit einer ersten Rotorstufe (1), eine Welle (3) und eine erste Nabe (5) zum Verbinden der ersten Rotorstufe (1) mit der Welle (3),
wobei die erste Nabe (5) eine Wuchtvorrichtung (30) zum Auswuchten der ersten Rotorstufe (1) aufweist, **dadurch gekennzeichnet, dass** die erste Rotorstufe (1) mittels der ersten Nabe (5) als einer vorderen Nabenverbindung die als front-hub bezeichnet werden kann, mit der Welle verbunden ist, wobei die erste Rotorstufe (1) einen ersten Rotorgrundkörper (9), weiterhin eine zweite Rotorstufe (7) einen zweiten Rotorgrundkörper (15) mit einem Rotorarm (19) zum Verbinden der ersten (1) mit der zweiten (7) Rotorstufe umfasst, und
dass der Rotorarm (19) eine radiale Durchtrittsöffnung (25) zum Durchströmen von Fluiden aus einem Rotorinnenraum (27) in einen Rotoraußenraum (29) aufweist.

2. Rotoranordnung (100) nach Anspruch 1, wobei die erste Rotorstufe (1) einen integral beschaufelten Rotorgrundkörper (9) oder einen Rotorgrundkörper mit formschlüssig verbundenen Schaufeln aufweist.

3. Rotoranordnung (100) nach einem der vorangegangenen Ansprüche, wobei die erste Nabe (5) einen Wuchtring und/oder Wuchtgewichte (33) zum Auswuchten der ersten Rotorstufe (1) umfasst.

4. Rotoranordnung (100) nach einem der vorangegangenen Ansprüche, wobei die erste Rotorstufe (1) keinen Wuchtbund und/oder Wuchtflansch aufweist.

5. Rotoranordnung (100) nach einem der vorangegangenen Ansprüche,wobei der Rotorarm (19) eine weitere Wuchtvorrichtung auf der radial äußeren Seite des Rotorarms (19) angeordnet ist.

6. Verdichter einer Strömungsmaschine, wobei der Verdichter wenigstens eine Rotoranordnung (100) nach einem der Ansprüche 1 bis 5 aufweist.

7. Verdichter nach Anspruch 6, wobei der Verdichter ein Hochdruckverdichter eines Flugtriebwerks ist.

## Claims

1. Rotor arrangement (100) for a turbomachine, comprising a rotor having a first rotor stage (1), a shaft (3), and a first hub (5) for connecting the first rotor stage (1) to the shaft (3), the first hub (5) having a balancing device (30) for balancing the first rotor stage (1), **characterized in that** the first rotor stage (1) is connected to the shaft by means of the first hub (5) as a front hub connection, which can be referred to as the front hub, the first rotor stage (1) comprising a first rotor main body (9), and a second rotor stage (7) comprising a second rotor main body (15) having a rotor arm (19) for connecting the first rotor stage (1) to the second rotor stage (7), and **in that** the rotor arm (19) has a radial through-opening (25) for fluids to flow through from a rotor interior (27) into a rotor exterior (29).

2. Rotor arrangement (100) according to claim 1, wherein the first rotor stage (1) has an integrally bladed rotor main body (9) or a rotor main body having interlockingly connected blades.

3. Rotor arrangement (100) according to either of the preceding claims, wherein the first hub (5) comprises a balancing ring and/or balancing weights (33) for balancing the fi rst rotor stage (1).

4. Rotor arrangement (100) according to any of the preceding claims, wherein the first rotor stage (1) has no balancing collar and/or balancing flange.

5. Rotor arrangement (100) according to any of the preceding claims, wherein the rotor arm (19) a further balancing device is arranged on the radially outer side of the rotor arm (19).

6. Compressor of a turbomachine, wherein the compressor has at least one rotor arrangement (100) according to any of claims 1 to 5.

7. Compressor according to claim 6, wherein the compressor is a high-pressure compressor of an aircraft engine.

## Revendications

1. Ensemble rotor (100) pour une turbomachine, comportant un rotor comportant un premier étage de rotor (1), un arbre (3) et un premier moyeu (5) permettant de relier le premier étage de rotor (1) à l'arbre (3), dans lequel le premier moyeu (5) comporte un dispositif d'équilibrage (30) permettant d'équilibrer le premier étage de rotor (1), **caractérisé en ce que** le premier étage de rotor (1) est relié, au moyen du premier moyeu (5), en guise d'une liaison de moyeu avant, laquelle peut être désignée de moyeu avant, à l'arbre, dans lequel le premier étage de rotor (1) comprend un premier corps de base de rotor (9), un second étage de rotor (7) comprend en outre un second corps de base de rotor(15) comportant un bras de rotor (19) permettant de relier le premier étage de rotor (1) au second étage de rotor (7), et que le bras de rotor (19) comporte une ouverture de passage (25) radiale permettant l'écoulement de fluides depuis un espace intérieur de rotor (27) vers un espace extérieur de rotor (29).

2. Ensemble rotor (100) selon la revendication 1, dans lequel le premier étage de rotor (1) comporte un corps de base de rotor (9) à aubage intégral ou un corps de base de rotor comportant des aubes reliées par liaison de complémentarité de forme.

3. Ensemble rotor (100) selon l'une quelconque des revendications précédentes, dans lequel le premier moyeu (5) comprend une bague d'équilibrage et/ou des poids d'équilibrage (33) permettant d'équilibrer le premier étage de rotor (1).

4. Ensemble rotor (100) selon l'une quelconque des revendications précédentes, dans lequel le premier étage de rotor (1) ne comporte pas de bande d'équilibrage et/ou de bride d'équilibrage.

5. Ensemble rotor (100) selon l'une quelconque des revendications précédentes, dans lequel au bras de rotor (19) un autre dispositif d'équilibrage, sur le côté radialement extérieur du bras de rotor (19), est associé.

6. Compresseur d'une turbomachine, dans lequel ledit compresseurcomporte au moins un ensemble rotor (100) selon l'une quelconque des revendications 1 à 5.

7. Compresseur selon la revendication 6, dans lequel ledit compresseurest un compresseur haute pression d'un moteur d'avion.
